**Europäisches Patentamt**

**European Patent Office**

**Office européen des brevets**

(19)

(11) Numéro de publication: **0 041 028**
**A1**

# (12) DEMANDE DE BREVET EUROPEEN

(21) Numéro de dépôt: **81400845.4**

(22) Date de dépôt: **26.05.81**

(51) Int. Cl.³: **F 24 J 3/02**

(30) Priorité: **27.05.80 FR 8011704**

(43) Date de publication de la demande: **02.12.81**
**Bulletin 81/48**

(84) Etats contractants désignés: **CH DE GB IT LI NL**

(71) Demandeur: **Chevreux, Pierre, La Pastourelle,**
**F-01630 Saint Genis Pouilly (FR)**
Demandeur: **Chevreux, Christine, nee Rebender, La**
**Pastourelle, F-01630 Saint Genis Pouilly (FR)**

(72) Inventeur: **Chevreux, Pierre, La Pastourelle,**
**F-01630 Saint Genis Pouilly (FR)**
Inventeur: **Chevreux, Christine, nee Rebender, La**
**Pastourelle, F-01630 Saint Genis Pouilly (FR)**

(74) Mandataire: **Thibon-Littaye, Annick, Cabinet A.**
**THIBON-LITTAYE 11 rue de l'Etang, F-78160 Marly Le Roi**
**(FR)**

(54) **Procédé et dispositif pour la réalisation de capteurs solaires dans la construction de bâtiments.**

(57) L'invention concerne l'industrie de la construction.

Elle a pour objet un dispositif capteur de l'énergie solaire qui comporte une structure alvéolée (5), réalisée par exemple en métal déployé, entre la surface exposée à l'extérieur d'une paroi de protection transparente (1) et une plaque (4) absorbant le rayonnement solaire.

1

<u>Procédé et dispositif pour la réalisation de capteurs</u>
<u>solaires dans la construction de bâtiments.</u>

L'invention concerne la réalisation de dispositifs capteurs de l'énergie solaire, utilisables dans l'industrie
de la construction, notamment en toiture des bâtiments.

L'énergie solaire captée par de tels dispositifs est en
général transmise sous forme thermique, par un véhicule
caloporteur, à des appareils qui l'utilisent, par exemple pour le chauffage des locaux. Les dispositifs capteurs sont conçus pour être installées en surface des
parties des bâtiments le mieux exposées au soleil. La
toiture des bâtiments constitue de ce point de vue une
surface privilégiée, qui peut être facilement orientée
transversalement au rayonnement solaire prédominant
dans un lieu déterminé.

Des dispositifs capteurs d'énergie solaire comportent
de manière connue une plaque absorbant le rayonnement
solaire et, sur l'extérieur, une paroi transparente
qui laisse parvenir le rayonnement solaire jusqu'à la
plaque absorbante en assurant un effet de serre dans
l'espace qui la sépare de cette plaque. L'aspect offert
par ce genre de dispositifs capteurs à l'observateur
humain est étroitement lié à celui de la plaque absorbante. Or, celle-ci présente essentiellement une surface
noire, ou tout au moins très foncée, difficilement acceptable du point de vue esthétique et ne permettant
guère de variations sans nuire considérablement à l'efficacité d'absorption vis-à-vis du rayonnement solaire.
Introduire des variations d'aspect en agissant sur la
paroi transparente n'est en pratique pas plus possible
car cette paroi doit avant tout être choisie pour sa
transparence et pour sa résistance aux agents atmosphériques.

L'invention permet de résoudre ces difficultés grâce à
l'emploi d'un constituant intermédiaire, qui donne au dispositif capteur un aspect esthétique sans diminuer sensiblement l'efficacité d'absorption du rayonnement. Elle permet par exemple de réaliser des dispositifs capteurs offrant à l'observateur un aspect de la couleur des briques, des tuiles ou d'ardoises, s'intégrant aisément dans une couverture en matériaux traditionnels, sans interférer avec le choix des matériaux les mieux adaptés à la réalisation de la plaque absorbante et de la paroi transparente.

Dans ce but, l'invention propose un procédé pour la réalisation de capteurs solaires dans la construction de bâtiments, caractérisé en ce qu'il consiste essentiellement à disposer une plaque absorbante pour le rayonnement solaire transversalement par rapport au rayonnement utile à capter et en situation d'échange thermique avec un caloporteur, à recouvrir la plaque d'une paroi protectrice extérieure transparente, et à interposer entre la plaque absorbante et la face de ladite paroi exposée à l'extérieur, une structure alvéolée offrant en direction du rayonnement utile une majeure partie de surface de vides jusqu'à la plaque absorbante, et dans une direction d'incidence rasante des parois opaques cachant pratiquement la plaque absorbante, auxquelles on donne une apparence esthétique visible de l'extérieur.

L'invention a de même pour objet un dispositif capteur solaire pour la construction, notamment pour la réalisation de toitures, caractérisé en ce qu'il comprend une plaque absorbante pour le rayonnement solaire, une paroi protectrice extérieure transparente, et une structure alvéolée interposée entre la plaque absorbante et la face extérieure de ladite paroi, ladite structure offrant dans une direction normale à la plaque une majeure partie de surface de vides jusqu'à la plaque absorbante, et dans une direction peu inclinée sur cette plaque des parois opaques la cachant pratiquement et présentant un aspect décoratif.

La structure alvéolée peut être disposée dans un espace d'air entre la plaque absorbante et la paroi extérieure. Elle peut aussi être noyée dans le matériau même de cette paroi transparente. La paroi transparente peut avantageusement être constituée par un élément de construction de même forme qu'un élément de construction traditionnel, un élément de toiture tel qu'une tuile par exemple, mais en matériau transparent, ou par plusieurs de tels éléments assemblés. Ces éléments de paroi laissent librement passer le rayonnement solaire, qui pénètre ainsi dans le dispositif capteur en traversant les vides de la structure alvéolée pour atteindre la plaque absorbante. Cependant, il est souvent avantageux de constituer le dispositif sous forme d'un panneau directement sur place, en montant et assemblant successivement sur la toiture, la plaque absorbante, la structure alvéolée et la paroi transparente.

L'invention convient d'une manière particulièrement avantageuse à la réalisation de toitures de bâtiments, sur des plans inclinés, encore que les mêmes dispositifs peuvent aussi être utilisés sur d'autres surfaces sans abandonner les avantages de l'invention, par exemple en hauteur sur des murs même verticaux. Dans un cas comme dans l'autre, le dispositif n'est normalement pas vu dans la direction du soleil. A des observateurs normaux, par exemple des passants marchant à terre autour du bâtiment, il montre une face visible des parois opaques de la structure alvéolée, qui est avantageusement réalisée pour présenter un aspect décoratif. Une coloration analogue à celle des matériaux traditionnels, celle des tuiles ou celle des ardoises par exemple, permet d'obtenir globalement un aspect de couverture traditionnelle en donnant à l'élément transparent du dispositif la forme correspondante.

Conformément à un mode de réalisation préféré de l'invention, la structure alvéolée peut être constituée par une feuille de métal déployé, c'est-à-dire une feuille métallique dans laquelle on a pratiqué des fentes parallèles en quinconce et que l'on a étirée dans une direction transversale par rapport aux fentes pour écarter les côtés des fentes et former ainsi les alvéoles. Cette forme de réalisation n'est cependant nullement limitative et dans d'autres cas, on préfère utiliser par exemple un réseau de nid d'abeilles.

On remarquera ici que l'on a déjà proposé d'utiliser des structures du type des feuilles de métal déployé ou des réseaux de nids d'abeilles dans la construction de capteurs solaires. Mais il s'agissait alors, comme dans le brevet américain No. 4 073 282, de constituer par ce moyen l'élément absorbant même du capteur, dans des conceptions où par suite, la structure est conçue et disposée de manière à offrir le maximum de surface sur le trajet des rayons et à présenter une surface absorbante, donc avec tous les inconvénients d'une présentation inesthétique. Dans l'invention, au contraire, il s'agit d'une structure intermédiaire, distincte de l'élément absorbant, et sa conception comme celle de l'ensemble du capteur concourent à lui faire assurer une fonction nouvelle, dans l'aspect extérieur du capteur.

D'autres particularités de l'invention apparaîtront dans la description donnée ci-après de modes de réalisation particuliers du dispositif capteur d'énergie solaire suivant l'invention. Cette description se réfère aux figures 1 à 5 des dessins annexés dans lesquelles :

La figure 1 représente le dispositif dans un premier mode de réalisation, utilisé dans une toiture de tuiles ;
la figure 2 en représente une coupe verticale schématique ;
la figure 3 illustre un détail de la figure 1 à échelle agrandie ;
la figure 4 représente schématiquement, en coupe, un autre mode de réalisation du dispositif, en variante de la figure 2 ; et

la figure 5 montre, selon un autre mode de réalisation, un dispositif selon l'invention en forme de panneau capteur intégré dans une toiture.

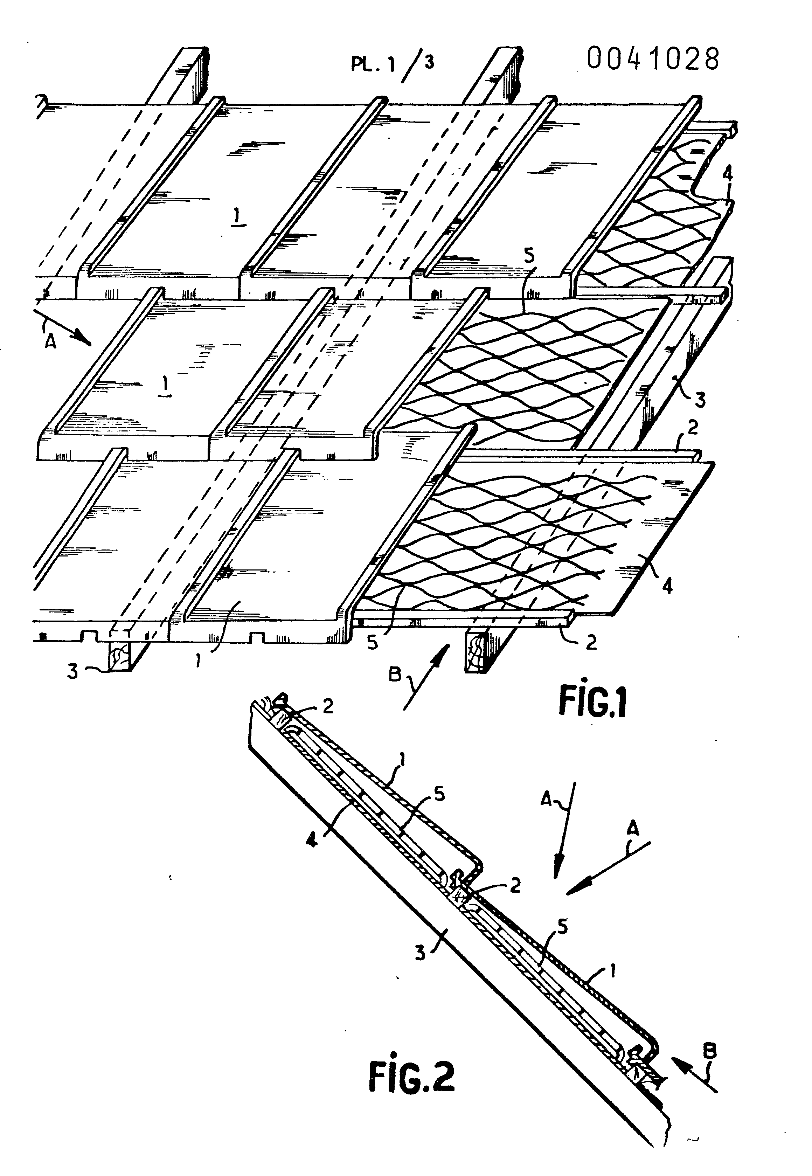

Dans les modes de réalisation décrits et représentés en exemples, sur les figures 1 à 4, le dispositif capteur d'énergie solaire est constitué de manière à simuler des tuiles traditionnelles. A cet effet, les éléments extérieurs ont la forme de ces tuiles traditionnelles, mais ils sont réalisés en un matériau transparent. Il s'agit donc de tuiles transparentes 1, ici en verre, qui sont montées de la manière habituelle sur des liteaux 2 horizontaux, supportés par des chevrons 3.

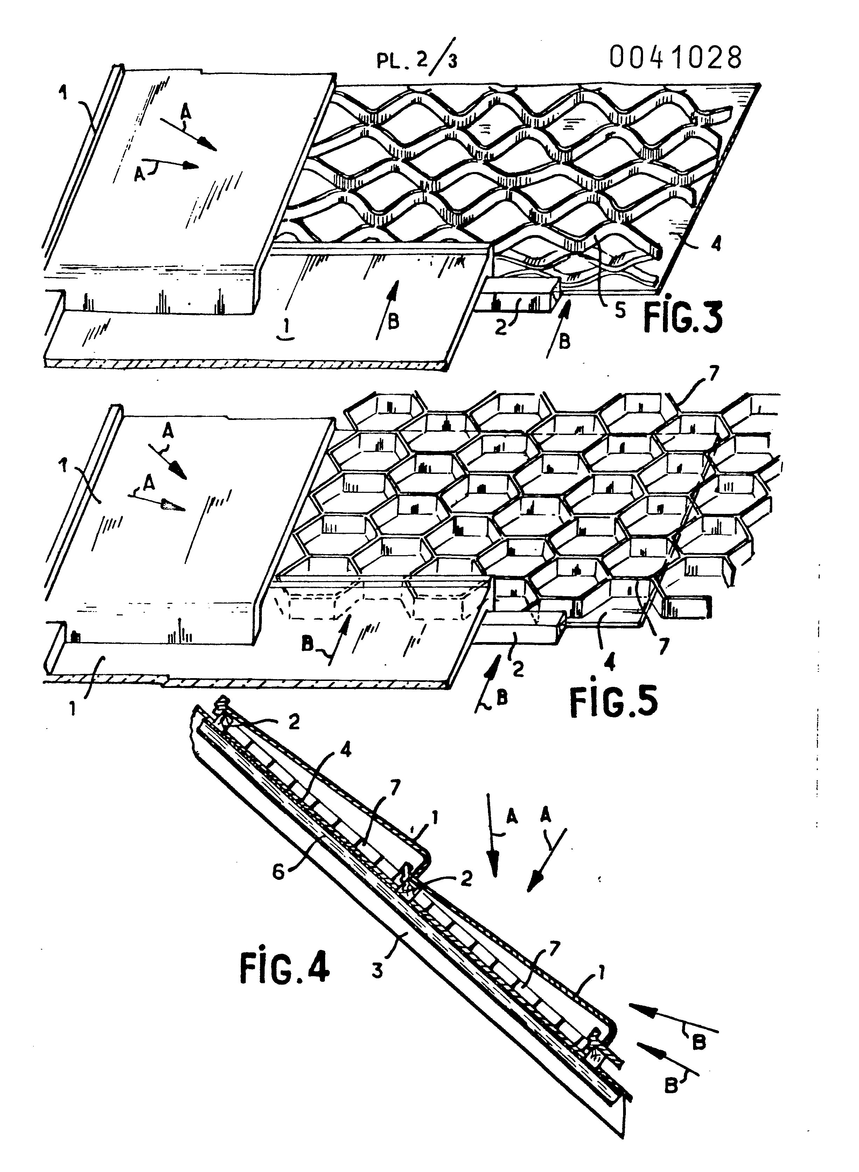

Toutefois, avant de mettre en place les tuiles transparentes sur la toiture des figures 1 et 2, on a disposé entre les liteaux, sur toute la surface disponible dans le plan de la toiture, des plaques 4 de matériau absorbant pour le rayonnement solaire. Ces plaques sont planes et continues sous plusieurs tuiles adjacentes. Elles supportent une feuille de métal déployé 5, disposée également sur toute l'étendue entre les liteaux 2. Comme le montre la figure 3, le métal déployé forme un réseau de bandes métalliques dont on observera qu'elles se placent principalement dans des directions normales au plan général du toit (c'est-à-dire celui de la plaque 4) ou dans des directions légèrement inclinées sur la normale, avec toutefois des effets de torsion sur chaque tronçon entre deux noeuds adjacents du réseau, qui sont susceptibles de créer des turbulences lorsqu'il circule de l'air à leur voisinage.

La feuille 5 se trouve ainsi enfermée, dans la toiture terminée, dans l'enceinte comprise entre la plaque absorbante 4 et les tuiles transparentes 1. Dans la direction perpendiculaire à la toiture, les larges vides qu'elle comporte laissent librement pénétrer les rayons solaires jusqu'à la surface de la plaque absorbante 4. Les bandes métalliques limitant les mailles vides sont vues par la tranche dans cette direction et l'absorption qu'elles introduisent est minime. Par contre, un observateur regardant la toiture sous une forte inclinaison voit essentiellement l'une des faces des bandes, visible dans cette direction, et pour une incidence presque rasante, ces bandes sont sufissamment hautes pour cacher presque complètement la plaque absorbante à l'observateur.

La feuille 5 pourrait en fait être remplacée par toute autre structure alvéolée équivalente, formant un filet ou réseau lamellaire dont les mailles seraient limitées par un ruban présentant une section minimale en direction des rayons solaires et une section maximale en direction d'un observateur situé au sol. Mais la feuille de métal déployé constitue une solution simple et peu coûteuse, dont en outre on a pu vérifier expérimentalement qu'elle donnait toute satisfaction pour le but recherché.

En pratique, les tuiles du genre décrit sont utilisées pour couvrir des toits d'inclinaison de l'ordre de 30 à 50 degrés. Le toit équipé de capteurs solaires est orienté pour que le soleil utile le frappe suivant la normale ou dans une direction peu inclinée sur la normale (flèches A sur les figures). Mais les observateurs regardant le toit le voient normalement sous une inclinaison beaucoup plus forte (flèches B sur les figures). Les bandes métalliques de la feuille 5 ont par exemple une largeur (en hauteur sur la plaque 4) de l'ordre de 2 à 10 mm pour un diamètre de mailles d'environ 2 cm, ou plus généralement compris entre 1 et 5 centimètres.

Pour donner à la structure de métal déployé, telle qu'elle est vue par l'observateur, une coloration agréable, voisine de celle de la brique, on réalise par exemple cette structure à partir d'une feuille de cuivre, traitée thermiquement pour y créer une couche superficielle d'oxyde de cuivre rouge. Dans l'utilisation qui en est faite selon l'invention, une telle structure a l'avantage de bien conduire la chaleur et de ne pas être réfléchissante.

N'étant pas visible, la plaque absorbante peut être réalisée de toutes manières connues. En général, on utilise une plaque métallique portant un revêtement noir sur la face orientée vers le soleil.

Le transfert de la chaleur s'effectue également de manière connue à partir de cette plaque. Dans le mode de réalisation de la figure 2, le caloporteur est constitué par de l'air circulant dans l'espace entre les tuiles transparentes et la plaque absorbante, qui est recueilli comme air de chauffage pour utilisation dans les locaux du bâtiment. La présence de la feuille de métal déployé 5 y crée une turbulence avantageuse. Elle permet un transfert thermique efficace par le fait que la feuille 5 est repliée sur les bords, vers la plaque 4, pour être écartée de cette dernière sur la surface utile, d'une distance qui peut être par exemple de l'ordre du centimètre ou plus si l'on préfère faire suivre à la feuille 5 le profil de chaque tuile 1.

Dans le mode de réalisation de la figure 4, on a schématiquement représenté des conduites 6, en contact thermique avec la plaque 5, contre la face opposée de celle-ci, sous la toiture. Dans ce cas, on a trouvé plus avantageux de remplacer la feuille de métal déployé par une structure en nids d'abeilles 7, appliquée contre la plaque 5, du côté face à la tuile. La structure 7, en aluminium par exemple, peut avoir par exemple une dizaine de millimètres d'épaisseur et comporter des alvéoles, orientées normalement au toit, de 8 à 10 mm de diamètre. Elle crée un matelas d'air immobile qui maintient la plaque 5 chaude par rapport à l'air extérieur.

En variante des réalisations représentées, la structure

alvéolée, au lieu d'être disposée dans l'espace entre tuile et plaque absorbante, peut être noyée dans la tuile transparente, réalisée alors par exemple en matière plastique moulée. Il peut s'agir par exemple de métal déployé réalisé à partir d'une feuille d'aluminium revêtue d'alumine par traitement électrolytique et présentant alors une coloration brune.

D'autres formes de tuiles peuvent aussi être réalisées d'une manière analogue à ce qui a été illustré pour des tuiles plates. Dans des tuiles rondes par exemple, la structure de métal déployé peut être courbée suivant la forme de la tuile, ou rester plane et parallèle à la plaque absorbante. Mais les variantes de réalisation du dispositif selon l'invention peuvent s'écarter sensiblement plus des cas particuliers décrits. Ainsi notamment, les tuiles transparentes élémentaires peuvent être remplacées par des panneaux de protection transparents couvrant la surface de plusieurs tuiles, ou au contraire la plaque absorbante et la structure de métal déployé peuvent couvrir seulement la surface d'une tuile et être fixés à la tuile à la fabrication, l'ensemble constituant ainsi un élément de toiture pour réaliser des capteurs solaires par assemblage des éléments individuels.

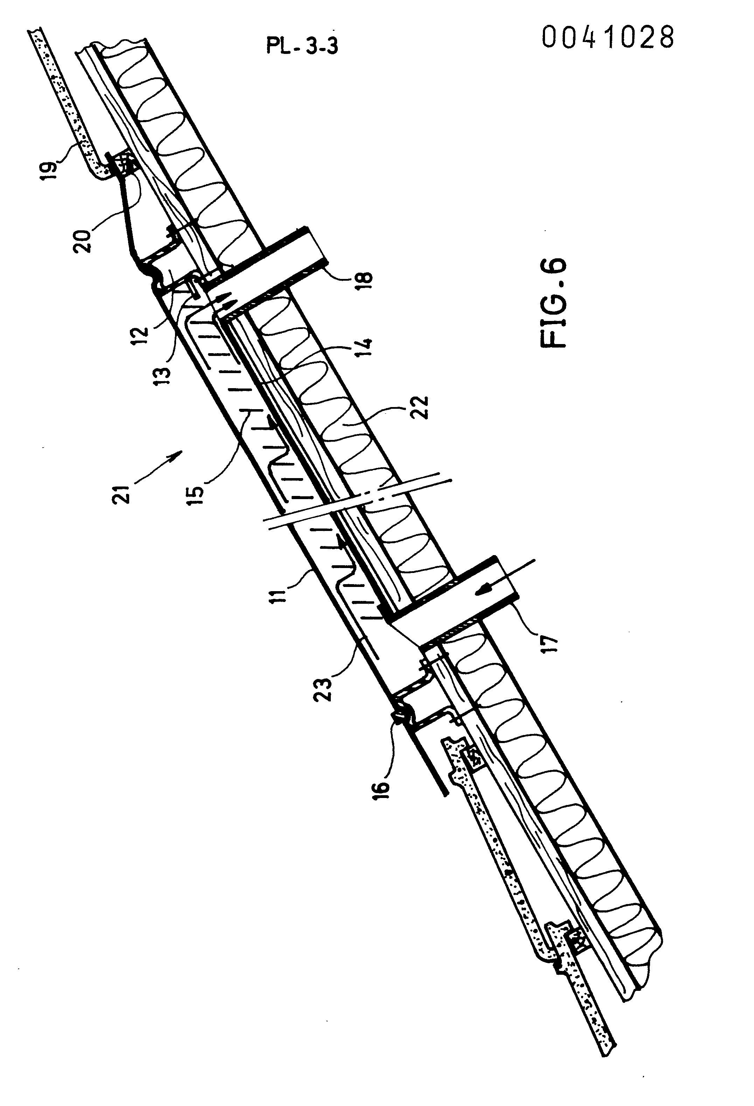

La figure 5 montre ainsi, dans une toiture de tuiles 19 posées sur des liteaux 20, un panneau capteur 21 monté sur place lors de la construction. Il est installé en un emplacement plan du toit en pente, dépourvu de liteaux et de tuiles. On a aussi représenté une couche d'isolation thermique, 22, disposée intérieurement sous le toit, sur toute son étendue. La plaque absorbante 14 du capteur 21 est constituée en métal noir d'une manière analogue à ce que l'on a déjà décrit, la feuille étant amenée sur place en rouleau. Des profilés d'aluminium 12 sont assemblés pour former un cadre entourant le panneau. Le long de ce cadre et de place en place sur la plaque absorbante 14 on dispose des cales 13 destinées à supporter la structure intermédiaire 15. Celle-ci est constituée par du métal déployé comme dans le mode de réalisation des figures 1 et 2, que l'on déroule à partir d'une feuille continue en rouleau et que l'on pose sur les cales 13 après l'avoir découpée à la dimension du panneau. Pour compléter le capteur, on constitue la paroi supérieure transparente 11 par un film de matière plastique, également amené en rouleaux et découpé sur place. Un film suffisamment résistant pour cette application peut être notamment en une matière plastique transparente à base de polyoléfines halogénées, du type du film commercialisé sous la marque Tedlar par la firme Dupont de Nemours. Ce film est tendu sur le cadre formé par les profilés 12 et maintenu sur ces derniers par un système de jonc élastique 16.

Le fluide caloporteur chauffé par le panneau de la figure 5 est constitué par de l'air dont la circulation est organisée dans l'espace entre la plaque absorbante 14 et la paroi transparente 11, dans une direction générale qui leur est parallèle, mais avec une légère surpression au voisinage de la plaque absorbante, de telle sorte que l'air pénétrant dans l'espace forme une couche relativement froide en contact avec la paroi supérieure transparente 11 avant de traverser la structure intermédiaire de métal déployé 15 et de circuler contre la plaque absorbante. On a représenté sur la figure l'arrivée d'air 17, débouchant juste sous la paroi 11, et la sortie 18, ouverte au niveau du volume léchant la plaque 14, ainsi que des flèches 23 illustrant la circulation.

Sur un pan de toit d'une inclinaison courante, le panneau peut occuper une surface de 10 $m^2$ par exemple. La partie visible reste, comme dans les cas précédents, constitué par la surface de l'un des côtés des lames du métal déployé, ce qui donne à la structure intermédiaire une fonction décorative permettant des effets esthétiques variés.

10

0041028

Toutes les variantes des dispositifs décrits et les
autres dispositions techniques équivalentes restent
dans le cadre de la présente invention.

<u>Revendications</u>

1. Procédé pour la réalisation de capteurs solaires
dans la construction de bâtiments, consistant essentiellement à disposer une plaque absorbante (4, 14) pour le
rayonnement solaire transversalement par rapport au rayonnement utile à capter et en situation d'échange thermique
avec un caloporteur, à recouvrir la plaque (4, 14) d'une
paroi protectrice extérieure transparente (1), caractérisé en ce que l'on interpose entre la plaque absorbante
(4, 14) et la face de ladite paroi exposée à l'extérieur,
une structure alvéolée (5, 15) offrant en direction du
rayonnement utile une majeure partie de surface de vides
jusqu'à la plaque absorbante, et dans une direction d'incidence rasante des parois opaques cachant pratiquement
la plaque absorbante auxquelles on done une apparence
esthétique visible de l'extérieur.

2. Procédé selon la revendication 1, caractérisé en ce
que l'on monte sur place, successivement, la plaque
absorbante (14), la structure alvéolée (5, 15) et la
paroi transparente (1, 11), l'une au moins, ou chacun,
à partir de matières en rouleaux.

3. Procédé selon la revendication 1 ou 2, caractérisé
en ce que l'on organise une circulation d'air caloporteur dans l'espace compris entre la paroi transparente
(11) et la plaque absorbante (14), dans une direction
générale parallèle à celle-ci, et à travers ladite
structure (15) de ladite paroi à ladite plaque, en maintenant une couche d'air relativement froid contre la
paroi absorbante.

4. Dispositif capteur solaire pour la construction,
notamment pour la réalisation de toitures, comprenant
une plaque absorbante (4) pour le rayonnement solaire
et une paroi protectrice extérieure transparente (1),
caractérisé en ce qu'il comporte en outre une structure alvéolée (5) interposée entre la plaque absorbante et la face extérieure de ladite paroi, ladite structure offrant dans une direction normale à la plaque une majeure partie de surface de vides jusqu'à la plaque absorbante, et dans une direction peu inclinée sur cette plaque des parois opaques la cachant pratiquement et présentant un aspect décoratif.

5. Dispositif selon la revendication 4, caractérisé en ce que la structure alvéolée est en métal déployé.

6. Dispositif selon la revendication 4 ou 5, caractérisé en ce que la structure alvéolée est supportée parallèlement à la plaque absorbante à l'écart de celle-ci, dans un espace d'air caloporteur en circulation recouvert par la paroi transparente.

7. Dispositif selon la revendication 4 ou 5, caractérisé en ce que la structure alvéolée est noyée dans la paroi absorbante.

8. Dispositif selon l'une quelconque des revendications 4 à 7, caractérisé en ce que la paroi transparente présente la forme d'éléments de toiture traditionnels et en ce qu'une face visible des parois de la structure alvéolée est de coloration correspondant à celle desdits éléments traditionnels.

9. Dispositif selon la revendication 4, caractérisé en ce que la structure alvéolée, en nids d'abeilles, est apposée contre la plaque absorbante sur la face de celle-ci en regard de la paroi transparente et en ce qu'il comporte des moyens de circulation d'un caloporteur en contact thermique avec l'autre face de la plaque absorbante.

10. Dispositif selon la revendication 5, 6, 7 ou 9, caractérisé en ce qu'il est sous forme d'un panneau de toiture où la paroi transparente est constituée par un
film de matière plastique.

FIG.1

FIG.2

FIG.3

FIG.5

FIG.4

FIG.6

Office européen
des brevets

**RAPPORT DE RECHERCHE EUROPEENNE**

0041028

Numéro de la demande

EP 81 40 0845

| Catégorie | Citation du document avec indication, en cas de besoin, des parties pertinentes | Revendication concernée |
|---|---|---|
| | US - A - 4 094 717 (BARR)<br>* en entier *<br><br>-- | 1,3,4,<br>5,6,9 |
| | FR - A - 2 437 585 (STRANICKY)<br>* en entier *<br><br>-- | 2,3,10 |
| | US - A - 3 102 532 (SHOEMAKER)<br>* en entier *<br><br>-- | 5 |
| | FR - A - 2 410 794 (ROBERT)<br>* figure 8 *<br><br>-- | 8 |
| A/D | US - A - 4 073 282 (SCHRIEFER) | |
| A | FR - A - 2 415 178 (KORZDORFER) | |
| A | FR - A - 2 404 180 (PROPULSION) | |
| A | US - A - 4 106 483 (SUNWORKS) | |
| A | US - A - 4 090 494 (BORST) | |
| A | US - A - 4 144 871 (PORTER) | |
| A | US - A - 4 203 428 (FODOR) | |

**DOCUMENTS CONSIDERES COMME PERTINENTS**

**CLASSEMENT DE LA DEMANDE (Int. Cl.³)**

F 24 J 3/02

**DOMAINES TECHNIQUES RECHERCHES (Int. Cl.³)**

F 24 J

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 28.08.1981 | SMETS |

OEB Form 1503.1 06.78